# NEUE EUROPÄISCHE PATENTSCHRIFT

(11) **EP 1 002 205 B2**
(45) Veröffentlichungstag und Bekanntmachung des Hinweises auf die Entscheidung über den Einspruch: **17.06.2009**
(45) Hinweis auf die Patenterteilung: 23.04.2003
(21) Anmeldenummer: 98951190.2
(22) Anmeldetag: 14.08.1998
(51) Int. Cl.: F16J 15/12

(54) **METALLDICHTUNG UND BESCHICHTUNGSMATERIAL FÜR METALLDICHTUNGEN**
METAL SEAL AND COATING MATERIAL FOR METAL SEALS
JOINT METALLIQUE ET MATERIAU DE RECOUVREMENT POUR JOINTS METALLIQUES

(30) Priorität: 14.08.1997 DE 19735390
(43) Veröffentlichungstag der Anmeldung: 24.05.2000
(73) Patentinhaber: REINZ-Dichtungs-GmbH, 89233 Neu-Ulm (DE)
(72) Erfinder: ERB, Wilfried, D-89231 Neu-Ulm (DE); GOLLMITZER, Konrad, D-89312 Günzburg (DE); WEISS, Alfred, D-89231 Neu-Ulm (DE)
(74) Vertreter: Pfenning, Meinig & Partner GbR
(86) Internationale Anmeldenummer: PCT/DE1998/002459
(87) Internationale Veröffentlichungsnummer: WO 1999/009339

(56) Entgegenhaltungen:
- EP-A- 0 104 317
- EP-A- 0 302 279
- GB-A- 2 171 109
- JP- - 684 785
- US-A- 5 490 681
- US-A- 5 615 897

## Beschreibung

Die Erfindung betrifft eine Metalldichtung mit einer darauf aufgebrachten Beschichtung.

Bis vor wenigen Jahren waren Weichstoffdichtungen verbreitet, welche in der Regel aus einem planaren metallischen Träger und beidseitig auf den Träger aufgebrachten Weichstoffschichten bestanden. Die Weichstoffschichten mit Schichtdicken von jeweils 0,80 mm und mehr enthielten häufig die sehr stand- und temperaturfesten Asbestfasern in Kombination mit einem geringen Anteil elastomeren Bindemittels. Im Zuge des Asbestverbotes wurde die Asbestfaser jedoch durch andere, die Weichstoffschichten stabilisierende Fasern ersetzt.

Durch Prägen des Weichstoffmaterials lassen sich Weichstoffdichtungen derart formen, daß ohne zusätzliche elastische Elemente wie elastomere Wülste im Einbauzustand der Dichtung eine gleichmäßige Druckverteilung und brauchbare Dichtungseigenschaften realisierbar sind. Meistens wurde jedoch aufgrund der geringen Kompressibilität pro Einheitsdicke des Weichstoffmaterials das Prägen des Weichstoffs mit der zusätzlichen Verwendung elastischer Elemente kombiniert. Ein Sicken der Weichstoffdichtungen konnte nicht durchgeführt werden, da das Weichstoffmaterial zum Ausbrechen neigt.

In letzter Zeit werden die Weichstoffdichtungen durch die dünneren Metalldichtungen verdrängt. Diese umfassen eine oder mehrere Metalllagen, wobei die den abzudichtenden Flächen zugewandten Seiten der Metalldichtungen in der Regel eine dünne elastomere Beschichtung aufweisen. Da die dünne elastomere Beschichtung im Vergleich zu Weichstoffschichten nur eine unzureichende Anpassungsfähigkeit besitzen, werden Metalldichtungen zum überwiegenden Teil mit Sikken versehen. Die JP 6-084 785 B zeigt eine Dichtung mit einer Beschichtung, die ein Elastomer sowie organische und anorganische Fasern aufweist.

Nachteilig bei derartigen Metalldichtungen ist einerseits die Tatsache, daß die verwendeten elastomeren Beschichtungsmaterialien insbesondere bei höheren Temperaturen ein unbefriedigendes Standverhalten aufweisen. Typische elastomere Beschichtungsmaterialien zeigen beispielweise bei 300 °C und einer Pressung von 75 N/mm² für 30 min (RPM 510-B) Eindringtiefen von über 100 µm. Andererseits besitzen diese elastomeren Beschichtungen eine sehr geringe Kompressibilität und damit ein schlechtes Anpassungsvermögen. Aufgrund dieser Tatsache ist es notwendig, daß die Metalldichtungen mit zusätzlichen elastischen Elementen, z.B. Sicken, versehen werden.

Ausgehend von diesen und weiteren Nachteilen des Standes der Technik, liegt der Erfindung die Aufgabe zugrunde, eine beschichtete Metalldichtung zur Verfügung zu stellen, welche in einem weiten Temperaturbereich und insbesondere auch bei hohen Temperaturen, wie sie beispielsweise bei Anwendungen im Kfz-Bereich oder industriellen Anwendungen auftreten, gute Eigenschaften aufweisen. Die Dichtung sollte sickbar, aber insbesondere auch in ungesicktem Zustand einsetzbar sein. Deshalb muß das Beschichtungsmaterial neben einer hervorragenden Anpassungsfähigkeit auch eine verbesserte Temperatur-Standfestigkeit im Vergleich zu herkömmlichen Beschichtungsmaterialien aufweisen.

Diese Aufgabe wird gelöst durch eine beschichtete Metalldichtung mit den Merkmalen des Anspruches 1. Die Unteransprüche betreffen vorteilhafte und weiterbildende Ausgestaltungen der Erfindung.

Eine Metalldichtung nach Patentanspruch 1 besitzt über einen weiten Temperaturbereich vorteilhafte Eigenschaften. So weist die Metalldichtung bei geringen Temperaturen eine um ein Vielfaches höhere Kompressibilität und damit bessere Dichteigenschaften als herkömmliche, rein elastomere Beschichtungen auf. Aus diesem Grunde kann z.B. bei vielen Anwendungen auf Dichtungssicken verzichtet werden, was die Herstellungskosten von Dichtungen deutlich reduziert. Vorteilhafterweise besitzt das Beschichtungsmaterial außerdem eine wesentlich bessere Standfestigkeit unter Temperatur als ein rein elastomeres Material. Damit werden in einem weiten Temperaturbereich bis hin zu höheren Temperaturen gute Dichteigenschaften erzielt.

Die vorteilhaften Eigenschaften der vorgeschlagenen Dichtung beruhen in erster Linie auf der neuartigen Beschichtungskomposition, die es erlaubt, besonders dünne Schichten (0,05 bis 0,20 mm) zu realisieren, ohne daß die ausgezeichneten Eigenschaften verlorengehen. Die Beschichtungskomposition enthält neben einem Elastomer-Anteil insbesondere ein Gemisch aus mindestens einer organischen und mindestens einer anorganischen Faser. Die bevorzugt fibrillierten organischen Fasern verleihen dem Beschichtungsmaterial eine gute Strukturfestigkeit, während die anorganischen Fasern die Temperatur- und Druckstandfestigkeit verbessern. Zur optimalen Kombination dieser Charakteristika sollte der Anteil der organischen Fasern bei 0,5 bis 20 Gew.-%, bevorzugt bei 1 bis 5 Gew.-%, und der Anteil der anorganischen Fasern bei 5 bis 50 Gew.-%, bevorzugt bei 20 bis 25 Gew.-%, liegen. Der Elastomeranteil im Beschichtungsmaterial sollte 10 bis 60 Gew.-%, bevorzugt 20 bis 35 Gew.-%, betragen. Der Anteil an Füllstoffen bewegt sich im Bereich zwischen 10 bis 80 Gew.-% und bevorzugt bei 15 bis 55 Gew.-%. Weitere Chemikalien wie Schwefel oder Schwefelspender zum Vulkanisieren, Beschleuniger oder Alterungsschutzmittel werden in der Regel mit einem Anteil von ungefähr 2 Gew.-% zugegeben.

Im Vergleich zu Beschichtungsmaterialien mit nur einer einzigen Faserkomponente besitzen Beschichtungsmaterialien mit dem organisch/anorganischen Fasergemisch deutlich bessere Kennwerte. Die verbesserten Eigenschaften wie Kompressibilität, Rückfederung und Standfestigkeit sind besonders ausgeprägt, wenn das Verhältnis von Gewichtsanteil des mindestens einen Elastomers zur Summe der Gewichtsanteile der mindestens einen anorganischen und der mindestens einen organischen Faser im Bereich zwischen 1:1,1 und 1,5:1 und bevorzugt bei ungefähr 1:1 liegt.

Die richtige Wahl dieses Verhältnisses ist deshalb von Bedeutung, weil der Anteil des mindestens einen Elastomers so gewählt sein muß, daß alle Fasern mit Elastomer umgeben sind, um einen stabilen Verbund mit eingelagerten Fasern zu schaffen. Fällt der Elastomeranteil zu gering aus, bilden sich Anhäufungen von Fasern, zwischen denen sich nicht mit Elastomer belegte Freiräume befinden. Diese Freiräume können als Poren aufgefaßt werden, die vor allem bei geringen Schichtdicken wie sie beispielsweise bei Metalldichtungen verwendet werden zu einer Querschnittsundichtigkeit der Schicht führen können.

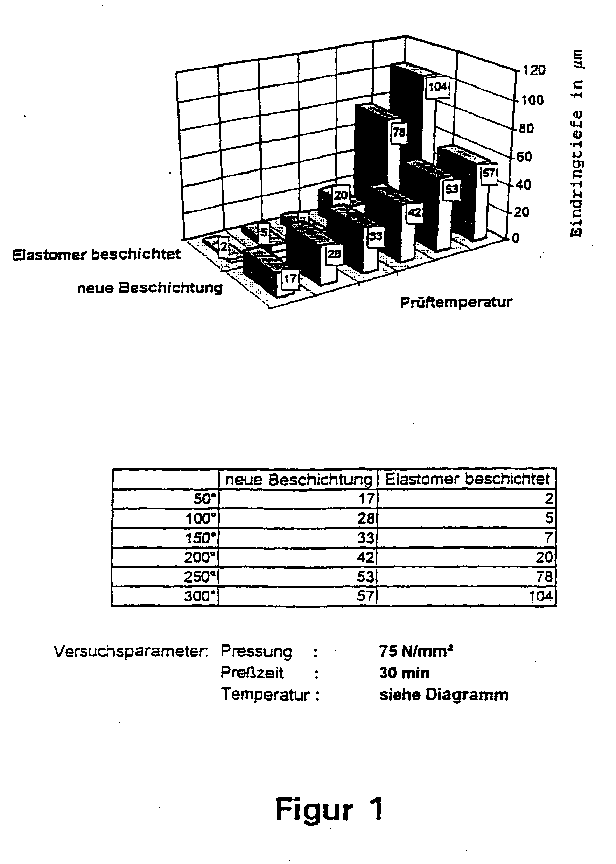

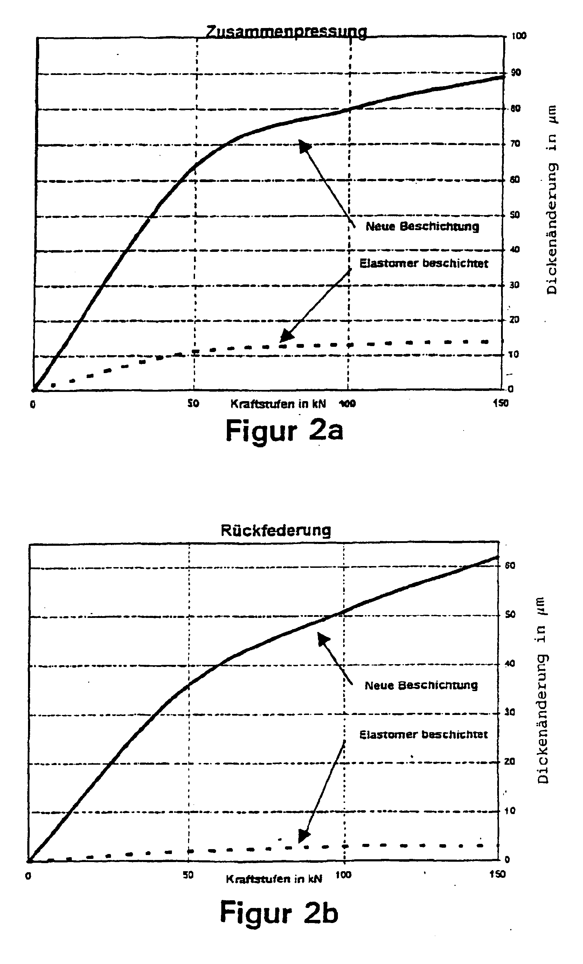

Wird der Elastomeranteil allerdings zu hoch gewählt, kommt es zu einem Stabilitätsverlust. In den Figuren 1, 2a und 2b ist für den Grenzfall einer rein elastomeren Beschichtung deutlich zu erkennen, daß bei zu hohem Elastomeranteil Temperaturbeständigkeit und Druckstandsfestigkeit sinken.

Die Beschichtung wird mindestens auf einer Außenfläche einer Metalldichtung, nämlich auf der Seite, die der abzudichtenden Fläche zugewandt ist, aufgebracht. Bevorzugt werden beide Außenflächen ganzflächig beschichtet. In bezug auf die Anzahl der Metall-Lagen unterliegt die Erfindung keiner Beschränkung. Bevorzugt sind jedoch Einlagenmetalldichtungen der unterschiedlichsten Geometrie, die sich nach den jeweiligen Anforderungen richtet. Für bestimmte Anwendungen kann auch an einem bereichsweise nicht ganzflächigen Auftrag des Beschichtungsmaterials gedacht werden.

Bei den Metalllagen werden erfindungsgemäß Metall und Metallierungen verstanden, wie sie bisher aus dem Stand der Technik für die Herstellung von Zylinderkopfdichtungen bekannt sind. Derartige metallische Werkstoffe sind z.B. Federstahl oder Stahlblech unterschiedlicher Legierungsbestandteile. Bei den erfindungsgemäßen Metalldichtungen werden ausschließlich die Dichtungen aus glattflächigen Metalllagen hergestellt. Die Erfindung nimmt damit sogenannte "Spießbleche" ausdrücklich aus.

Erfindungsgemäß wird dabei so vorgegangen, daß das Beschichtungsmaterial auf die glattflächigen Metalllagen aufgebracht wird. Bevorzugterweise wird vor dem Aufbringen des Beschichtungsmaterials noch mindestens eine weitere Beschichtung aufgebracht, die entweder ein Primer, eine Kleberschicht und/oder eine Haftvermittlerschicht ist. Dadurch wird eine bessere Haftung des Beschichtungsmaterials mit den glattflächigen Metallblechen erreicht. Das Aufbringen des Beschichtungsmaterials auf die Metalllagen kann nach den aus dem Stand der Technik an und für sich bekannten Techniken erfolgen und wird günstigerweise so durchgeführt, daß das Material als fließfähige Masse z.B. durch Walzen auf die Metalllage aufgebracht wird. Möglich ist auch, daß eine entsprechende Viskosität eingestellt wird, so daß dann die Masse durch Siebdruck auf die Metallaußenfläche aufgebracht werden kann.

Nach dem Aufbringen des Beschichtungsmaterials erfolgt dann ein Stanzen und gegebenenfalls Sicken. Verfahrenstechnisch ist es auch möglich, daß Stanzen und Sicken in einem Vorgang durchgeführt wird.

Weitere Vorteile und Ausgestaltungen der Erfindung ergeben sich aus den Figuren und den Ausführungsbeispielen. Es zeigen:
- Figur 1: die thermisch-mechanische Standfestigkeit der erfindungsgemäßen Beschichtung im Vergleich zu einer rein elastomeren Beschichtung, und
- Figuren 2a und 2b: das statische Verhalten Zusammenpressung-Rückfederung der Beschichtung im Vergleich zu einer rein elastomeren Beschichtung.

In Figur 1 ist die Eindringtiefe in µm nach RPM 510-B der Beschichtung einer erfindungsgemäßen Dichtung im Vergleich zu einer herkömmlichen, rein elastomeren Beschichtung bei einer Pressung von 75 N/mm² und einer Prozeßzeit von 30 min dargestellt. Deutlich zu erkennen ist die gute Kompressibilität der Beschichtung selbst bei niedrigen Temperaturen und die gute Standfestigkeit bei höheren Temperaturen.

In Figur 2a (Zusammenpressung) und Figur 2b (Rückfederung) ist die Be- und Entlastungsermittlung nach RPM 511 für das Beschichtungsmaterial einer erfindungsgemäßen Dichtung und eine herkömmliche Beschichtung vergleichend dargestellt. Die Beschichtung weist neben einer höheren Kompressibilität eine eindeutig verbesserte Rückfederung auf.

Als Elastomere eignen sich für das erfindungsgemäße Beschichtungsmaterial beispielsweise Nitrilkautschuk, Chloroprenkautschuk, Acrylatkautschuk, Fluorkautschuk und EPDM. Die mindestens eine anorganische Faser ist bevorzugt ausgewählt aus Mineralfasern, Keramikfasern, Basaltfasern, Glasfasern und Steinwolle. Als organische Fasern finden bevorzugt Aramid- oder Zellulosefasern Verwendung, obwohl andere Fasern, z.B. aus Polyamid oder Polyester, gleichfalls geeignet sind. Als Füllstoffe werden bevorzugt feinverteilte Materialien mit hoher spezifischer Oberfläche verwendet. Beispielhaft seien Kaolin, Talkum, Graphit, Ruß, Steinsmehl, Feldspate und Silikate genannt.

Neben der beschriebenen Beschichtung kann die erfindungsgemäße Dichtung weitere Schichten aufweisen. So kann zwischen Trägermaterial und Beschichtung eine Primer-, Kleber- und/oder eine Haftvermittlerschicht angeordnet sein. Auf der Beschichtung kann sich beispielsweise noch eine Kleberschicht oder eine Antihaftschicht befinden.

Anwendung findet das Beschichtungsmaterial vor allem in Bereichen, die höheren mechanischen und thermischen Belastungen ausgesetzt sind, z.B. Ansaugkrümmer, Ölwannen, Getriebeflansche, Ventilschrauben, Pumpen, Kompressoren und Achsen. Das Beschichtungsmaterial kann auch für Zylinderkopfdichtungen eingesetzt werden.

Nachfolgend werden einige Kompositionsbeispiele geschildert:

| Komposition 1: | |
|---|---|
| Nitrilkautschuk | 35 % |
| Vulkanisier-Chemikalien | 2 % |
| Mineralfasern | 32 % |
| Aramidfasern | 3 % |
| Füllstoffe | 28 % |

| Komposition 2: | |
|---|---|
| Nitrilkautschuk | 31 % |
| Vulkanisier-Chemikalien | 2 % |
| Mineralfasern | 28 % |
| Aramidfasern | 2 % |
| Füllstoffe | 37 % |

| Komposition 3: | |
|---|---|
| Nitrilkautschuk | 40 % |
| Vulkanisier-Chemikalien | 2 % |
| Mineralfasern | 35 % |
| Aramidfasern | 5 % |
| Füllstoff | 18 % |

| Komposition 4: | |
|---|---|
| Nitrilkautschuk | 30 % |
| Vulkanisier-Chemikalien | 2 % |
| Mineralfasern | 25 % |
| Aramidfasern | 5 % |
| Füllstoff | 38 % |

## Patentansprüche

1. Metalldichtung mit guter Standfestigkeit bis 250 °C mit mindestens einer Metalllage und mindestens einer zumindest bereichsweise auf einer Außenseite der Metalllage aufgebrachten Beschichtung,
**dadurch gekennzeichnet ,**
**daß** die Beschichtung eine Schichtdicke von
| | | | | |
|---|---|---|---|---|
| 0,05 | - | 0,20 mm aufweist und | | |
| 10 | - | 60 | Gew.-% | mindestens eines Elast omers |
| 5 | - | 50 | Gew.-% | mindestens einer anorgani- |
| | | | | schen Faser, |
| 0,5 | - | 20 | Gew.-% | mindestens einer organischen |
| | | | | Faser |
| 10. | - | 80 | Gew.-% | Füllstoffe |
enthält, wobei
das Verhältnis von Gewichtsanteil des mindestens einen Elastomers zur Summe der Gewichtsanteile der mindestens einen anorganischen und der mindestens einen organischen Faser im Bereich zwischen 1:1,1 bis 1,5:1 liegt.

2. Dichtung nach Anspruch 1,
**dadurch gekennzeichnet, daß** das mindestens eine Elastomers ausgewählt ist aus Nitrilkautschuk, Chloropropenkautschuk, Acrylatkautschuk, Fluorkautschuk und EPDM,

3. Dichtung nach einem der vorhergehenden Ansprüche 1 oder 2,
**dadurch gekennzeichnet, dass** die mindestens eine anorganische Faser ausgewählt ist aus Mineralfasern, Keramikfasern, Basaltfasern, Glasfasern und Steinwolle.

4. Dichtung nach einem der vorhergehenden Ansprüche 1 bis 3, **dadurch gekennzeichnet, dass** die mindestens eine organische Faser eine fibrillierte Faser ist.

5. Dichtung nach einem der vorhergehenden Ansprüche 1 bis 4,
**dadurch gekennzeichnet, dass** die mindestens eine organische Faser eine Aramidfaser oder eine Zellulosefaser ist.

6. Dichtung nach einem der vorhergehenden Ansprüche 1 bis 5,
**dadurch gekennzeichnet, dass** die mindestens eine organische Faser einer Polyamidfaser oder eine Polyesterfaser ist.

7. Dichtung nach einem der vorhergehenden Ansprüche 1 bis 6,
**dadurch gekennzeichnet, dass** die Füllstoffe ausgewählt sind aus Kaolin, Talkum, Graphit, Ruß, Steinmehl, Feldspaten und Silikaten.

8. Dichtung nach einem der vorhergehenden Ansprüche 1 bis 7,
**dadurch gekennzeichnet, dass** die Beschichtung einseitig oder mehrseitig aufgebracht ist.

9. Dichtung nach einem der vorhergehenden Ansprüche 1 bis 8,
**dadurch gekennzeichnet, dass** die Beschichtung ganzflächig auf die Metalllage aufgebracht ist.

10. Dichtung nach einem der vorhergehenden Ansprüche 1 bis 9,
**dadurch gekennzeichnet, dass** die Dichtung gesickt ist.

11. Dichtung nach einem der vorhergehenden Ansprüche 1 bis 10,
**dadurch gekennzeichnet, dass** zwischen der Metalllage und der Beschichtung zumindest bereichsweise mindestens eine weitere Schicht angeordnet ist.

12. Dichtung nach Anspruch 11,
**dadurch gekennzeichnet, dass** die mindestens eine weitere Schicht eine Primerschicht, eine Kleberschicht und/oder eine Haftvermittlerschicht ist.

13. Dichtung nach einem der vorhergehenden Ansprüche 1 bis 12,
**dadurch gekennzeichnet, dass** auf der Beschichtung zumindest bereichsweise mindestens eine weitere Schicht angeordnet ist.

14. Dichtung nach Anspruch 13,
**dadurch gekennzeichnet, dass** die mindestens eine weitere Schicht Antihaft- oder Klebeeigenschaften aufweist.

## Claims

1. A metal seal with a good creeping strength up to 250 °C comprising at least one metal layer and at least one coating applied to at least part of an outer surface of the metal layer, **characterised in that** the coating has a layer thickness of 0.05-0.20 mm and contains
10-60 wt.% of at least one elastomer,
5-50 wt.% of at least one inorganic fibre,
0.5-20 wt.% of at least one organic fibre,
10-80 wt.% of fillers,
wherein the ratio of the proportion by weight of the at least one elastomer to the sum of the proportions by weight of the at least one inorganic and the at least one organic fibre lies in the range between 1: 1.1 to 1.5 : 1.

2. A seal according to claim 1, **characterised in that** the at least one elastomer is selected from nitrile rubber, chloroprene rubber, acrylate rubber, fluorine rubber and EPDM.

3. A seal according to either one of the preceding claims 1 and 2, **characterised in that** the at least one inorganic fibre is selected from mineral fibres, ceramic fibres, basalt fibres, glass fibres and rock wool.

4. A seal according to any one of the preceding claims 1 to 3, **characterised in that** the at least one organic fibre is a fibrillated fibre.

5. A seal according to any one of the preceding claims 1 to 4, **characterised in that** the at least one organic fibre is an aramid fibre or a cellulose fibre.

6. A seal according to any one of the preceding claims 1 to 5, **characterised in that** the at least one organic fibre is a polyamide fibre or a polyester fibre.

7. A seal according to any one of the preceding claims 1 to 6, **characterised in that** the fillers are selected from kaolin, talcum, graphite, soot, rock meal, feldspars and silicates.

8. A seal according to any one of the preceding claims 1 to 7, **characterised in that** the coating is applied to one or more sides.

9. A seal according to any one of the preceding claims 1 to 8, **characterised in that** the coating is applied to the entire surface of the metal layer.

10. A seal according to any one of the preceding claims 1 to 9, **characterised in that** the seal is beaded.

11. A seal according to any one of the preceding claims 1 to 10, **characterised in that** at least one further layer is provided at least in part between the metal layer and the coating.

12. A seal according to claim 11, **characterised in that** the at least one further layer is a primer layer, an adhesive layer and/or an adhesion-promoting layer.

13. A seal according to any one of the preceding claims 1 to 12, **characterised in that** at least one further layer is provided over at least part of the coating.

14. A seal according to claim 13, **characterised in that** the at least one further layer has anti-adhesion or adhesive properties.

## Revendications

1. Joint métallique avec une bonne résistance jusqu'à 250 °C doté d'au moins une couche métallique et au moins un revêtement déposé par zones sur une face externe de la couche métallique, **caractérisé en ce que** le revêtement présente une épaisseur de
0,05 à 0,20 mm et comporte
10 à 60 % en poids d'au moins un élastomère,
5 à 50 % en poids d'au moins une fibre inorganique,
0,5 à 20 % en poids d'au moins une fibre organique,
10 à 80 % de charge, le rapport de la partie en poids d'au moins un élastomère sur la somme des parties en poids d'au moins une fibre inorganique et au moins une fibre organique se situant entre 1 : 1,1 et 1,5 : 1.

2. Joint selon la revendication 1, **caractérisé en ce que** au moins un élastomère est choisi parmi le caoutchouc nitrile, le caoutchouc chloroprène, le caoutchouc acrylate, le caoutchouc fluorocarboné et l'EPDM.

3. Joint selon l'une des revendications précédentes 1 à 2, **caractérisé en ce que** au moins une fibre inorganique est choisie parmi les fibres minérales, les fibres céramiques, les fibres de basalte, les fibres de verre et la laine minérale.

4. Joint selon l'une des revendications précédentes 1 à 3, **caractérisé en ce qu'**au moins une fibre organique est une fibre fibrillée.

5. Joint selon l'une des revendications précédentes 1 à 4, **caractérisé en ce que** au moins une fibre organique est une fibre d'aramide ou une fibre de cellulose.

6. Joint selon l'une des revendications précédentes 1 à 5, **caractérisée en ce que** au moins une fibre organique est une fibre de polyamide ou une fibre de polyester.

7. Joint selon l'une des revendications précédentes 1 à 6, **caractérisé en ce que** la charge est choisie parmi le kaolin, le talc, le graphite, la suie, la chaux naturelle, les feldspaths et les silicates.

8. Joint selon l'une des revendications précédentes 1 à 7, **caractérisé en ce que** le revêtement est déposé sur une face ou sur plusieurs faces.

9. Joint selon l'une des revendications précédentes 1 à 8, **caractérisé en ce que** le revêtement est déposé sur toute la surface sur la couche métallique.

10. Joint selon l'une des revendications précédentes 1 à 9, **caractérisé en ce que** le joint est serti.

11. Joint selon l'une des revendications précédentes 1 à 10, **caractérisé en ce qu'**au moins une autre couche est disposée par zones entre la couche métallique et le revêtement.

12. Joint selon la revendication 11, **caractérisé en ce que** au moins une autre couche est une couche d'apprêt, une couche de colle et/ou une couche d'adhésif.

13. Joint selon l'une des revendications précédentes 1 à 12, **caractérisé en ce qu'**au moins une autre couche est disposée par zones sur le revêtement.

14. Joint selon la revendication 13, **caractérisé en ce que** au moins une autre couche présente des propriétés anti-adhésives ou adhésives.
